# EUROPEAN PATENT APPLICATION

(11) **EP 4 679 785 A1**
(43) Date of publication of application: **14.01.2026**
(21) Application number: 24799475.9
(22) Date of filing: 14.10.2024
(51) Int. Cl.: H04L 27/14

(54) **SIGNAL DEMODULATION METHOD AND APPARATUS, AND DEVICE AND STORAGE MEDIUM**

(30) Priority: 09.05.2024 CN 202410566532
(71) Applicant: CRSC RESEARCH & DESIGN INSTITUTE GROUP CO., LTD., Fengtai District Beijing 100070 (CN)
(72) Inventor: LV, Xianliang, Beijing 100070 (CN); LIU, Zhen, Beijing 100070 (CN); SUN, Guoying, Beijing 100070 (CN); DING, Huan, Beijing 100070 (CN); ZHANG, Shengwen, Beijing 100070 (CN); XU, Yanwen, Beijing 100070 (CN); LI, Yanfeng, Beijing 100070 (CN)
(74) Representative: Haseltine Lake Kempner LLP
(86) International application number: PCT/CN2024/124702
(87) International publication number: WO 2025/232088

(57) **Abstract**

The present disclosure discloses a method, apparatus, a device and a storage medium for signal demodulation. The method includes: acquiring at least two frames of message signals of a target balise; superimposing a current signal with a preset number of previous frames of signals adjacent to the current signal based on a synchronization algorithm to obtain a target signal, wherein the current signal is a message signal of any frame of the at least two frames of message signals of the target balise except the preset number of previous frames of message signals; and demodulating the target signal. By means of the solutions according to the present disclosure, it is possible to exploit the characteristics of the cyclical and repetitive transmission of the same message signal of the balise, and by accumulating currently received signal and signals received at the same position in previous frames after applying bit synchronization techniques, the signal-to-noise ratio is improved and the success rate of a signal being correctly demodulated is improved, i.e., the performance of BTM to receive messages of the balise is improved.

## Description

### TECHNICAL FIELD

Embodiments of the present disclosure relate to the technical field of rail traffic, and in particular, to a method, apparatus, device and storage medium for signal demodulation.

### BACKGROUND

BTMs (Balise Transmission Modules) and balise devices are one of the main ways train control systems achieve train-ground information transmission, and a ground balise modulates internally stored messages into 2FSK (Binary Frequency Shift Keying) analog signals and transmits the signals to the air when a train passes the ground balises. The BTM receives the analog message signals via an antenna, demodulates them back into digital messages, and decodes them to resolve valid information for a balise. Message signals of a balise are divided into long messages (length of 1023 bits) and short messages (length of 341 bits), which are transmitted cyclically after the train passes the balise and the balise is activated (BTM antenna radiates energy).

The BTM needs to continuously and correctly demodulate a 1023-bit (long message) or 341-bit (short message) FSK modulated signal in order to achieve correct decoding, otherwise it will lead to the loss of the balise. A number of algorithms are currently available to achieve 2FSK signal demodulation, mainly classified as coherent demodulation and incoherent demodulation, but these algorithms do not make full use of the characteristics of the cyclical and repetitive transmission of mssage signals of the balise, resulting in failure to continuously and correctly demodulate a 1023-bit (long message) or 341-bit (short message) FSK modulated signal in the presence of short periods of strong interference noise, which leads to the failure of the receiving balise.

### SUMMARY

Embodiments of the present disclosure provide a method, apparatus, device and storage medium for signal demodulation, which can take advantage of the cyclical and repetitive transmission of message signals of the balise, improve the signal-to-noise ratio and improve the success rate of a signal being correctly demodulated, i.e., improve the performance of BTM to receive messages of the balise, by accumulating currently received signal and signals received at the same position in previous frames after bit synchronization techniques.

According to an aspect of the present disclosure, there is provided a method for signal demodulation. The method comprises:
Acquiring at least two frames of message signals of a target balise;
Superimposing a current signal with a preset number of previous frames of signals adjacent to the current signal based on a synchronization algorithm to obtain a target signal, wherein the current signal is a message signal of any frame of the at least two frames of message signals of the target balise except the preset number of previous frames of message signals; and
Demodulating the target signal.

In some embodiments of the present disclosure, the superimposing the current signal with the preset number of previous frames of signals adjacent to the current signal based on the synchronization algorithm to obtain the target signal comprises:
Acquiring a phase corresponding to each bit in the current signal and a phase corresponding to each bit in the preset number of previous frames of signals adjacent to the current signal;
Performing bit synchronization on the phase corresponding to each bit in the current signal and the phase corresponding to each bit in the preset number of previous frames of signals adjacent to the current signal based on the synchronization algorithm;
Superimposing the current signal with the preset number of previous frames of signals adjacent to the current signal after the bit synchronization to obtain the target signal.

In some embodiments of the present disclosure, the superimposing the current signal with the preset number of previous frames of signals adjacent to the current signal after the bit synchronization to obtain the target signal comprises:
Superimposing an amplitude of the current signal with amplitudes of the preset number of previous frames of signals adjacent to the current signal after the bit synchronization to obtain a target signal.

In some embodiments of the present disclosure, the acquiring at least two frames of message signals of the target balise comprises:
Acquiring a set of message signals corresponding to the target balise;
Acquiring length information of message signals in the set of message signals;
Dividing the set of message signals based on the length information to obtain at least two frames of message signals.

In some embodiments of the present disclosure, the length information of message signals comprises a first bit length and a second bit length.

According to another aspect of the present disclosure, there is provided an apparatus for signal demodulation. The apparatus comprises:
An acquisition module, configured to acquire at least two frames of message signals of a target balise;
A superimposition module, configured to superimpose a current signal with a preset number of previous frames of signals adjacent to the current signal based on a synchronization algorithm to obtain a target signal, wherein the current signal is a message signal of any frame of the at least two frames of message signals of the target balise except the preset number of previous frames of message signals; and
A demodulation module, configured to demodulate the target signal.

In some embodiments of the present disclosure, the superimposition module comprises:
A first acquisition unit, configured to acquire a phase corresponding to each bit in the current signal and a phase corresponding to each bit in the preset number of previous frames of signals adjacent to the current signal;
A bit synchronization unit, configured to perform bit synchronization on the phase corresponding to each bit in the current signal and the phase corresponding to each bit in the preset number of previous frames of signals adjacent to the current signal based on the synchronization algorithm; and
A superimposition unit, configured to superimpose the current signal with the preset number of previous frames of signals adjacent to the current signal after the bit synchronization to obtain the target signal.

In some embodiments of the present disclosure, the superimposition unit is particularly configured to:
Superimpose an amplitude of the current signal with amplitudes of the preset number of previous frames of signals adjacent to the current signal after the bit synchronization to obtain a target signal.

According to another aspect of the present disclosure, there is provided an electronic device. The electronic device comprises:
At least one processor; and
A memory communicatively connected with the at least one processor; wherein,
The memory stores computer programs executable by the at least one processor, the computer programs, when executed by the at least one processor, enable the at least one processor to perform the method for signal demodulation according to any one of the embodiments of the present disclosure.

According to another aspect of the present disclosure, there is provided a computer-readable storage medium storing computer instructions which, when executed by a processor, cause the processor to implement the method for signal demodulation according to any one of the embodiments of the present disclosure.

According to embodiments of the present disclosure, firstly at least two frames of message signals of a target balise are acquired, then a current signal is superimposed with a preset number of previous frames of signals adjacent to the current signal based on a synchronization algorithm to obtain a target signal, wherein the current signal is a message signal of any frame of the at least two frames of message signals of the target balise except the preset number of previous frames of message signals, and finally the target signal is demodulated. By means of the solution according to the present disclosure, it is possible to exploit the characteristics of the cyclical and repetitive transmission of the same message signal of the balise, and by accumulating currently received signal and signals received at the same position in previous frames after applying bit synchronization techniques, the signal-to-noise ratio is improved and the success rate of a signal being correctly demodulated is improved, i.e., the performance of BTM to receive messages of the balise is improved.

It should be understood that what is described in this section is not intended to identify key or critical features of embodiments of the present disclosure nor is it intended to limit the scope of the present disclosure. Other features of the present disclosure will become apparent from the following description.

### BRIEF DESCRIPTION OF DRAWINGS

In order to more clearly illustrate the technical solutions of the embodiments of the present disclosure, the following will be briefly described with reference to the accompanying drawings which are required to be used in the embodiments. It is to be understood that the following drawings illustrate only certain embodiments of the present disclosure and are therefore not to be considered as limiting in scope, and further related drawings can be derived from these drawings by those of ordinary skill in the art without the exercise of inventive faculty.
Fig. 1 is a flowchart of a method for signal demodulation in an embodiment of the present disclosure;
Fig. 2 is a structural diagram of an apparatus for signal demodulation in an embodiment of the present disclosure;
Fig. 3 is a structural schematic diagram of an electronic device implementing a method for signal demodulation according to an embodiment of the present disclosure.

### DETAILED DESCRIPTION

In order for those skilled in the art to better understand the solutions of the present disclosure, the technical solutions of the embodiments of the present disclosure will be clearly and completely described below in conjunction with the accompanying drawings of the embodiments of the present disclosure. Obviously, the described embodiments are only a part of the embodiments of the present disclosure, rather than all of the embodiments. Based on the embodiments in the present disclosure, all other embodiments obtained by those of ordinary skill in the art without making inventive labor should fall into the scope of protection of the present disclosure.

It is noted that the terms "first", "second" and the like in the description and claims of the present disclosure as well as in the drawings described above, are used for distinguishing between similar objects and not necessarily for describing a particular sequential or chronological order. It is to be understood that data thus used may be interchanged under appropriate circumstances, so that the embodiments of the present disclosure described herein can be implemented in other orders than those illustrated or described herein. Furthermore, the terms "including", "comprising" and any variations thereof are intended to cover a non-exclusive inclusion, such that, for example, a process, method, system, article, or apparatus that comprises a list of steps or elements is not necessarily limited to those steps or elements expressly listed but may include other steps or elements not expressly listed or inherent to such process, method, article, or apparatus.

It can be understood that before using the technical solution disclosed by the embodiments of the present disclosure, the user should be informed of the type, the use range, the use scenario, and the like of the personal information to which the present disclosure relates and the user's authorization should be obtained in an appropriate manner in accordance with the relevant laws and regulations.

### First embodiment

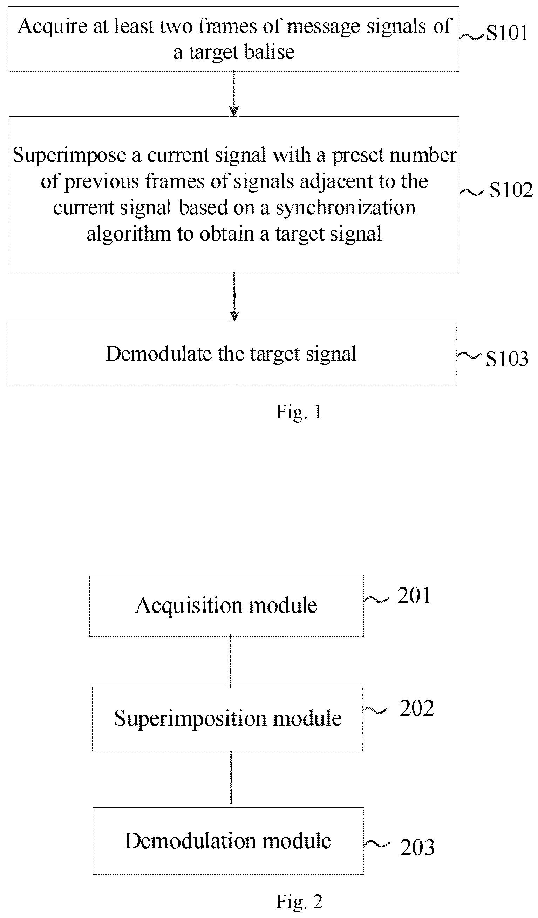

Fig. 1 is a flowchart of a method for signal demodulation according to an embodiment of the present disclosure. The embodiment is applicable to the case of signal demodulation, and the method can be performed by an apparatus for signal demodulation according to an embodiment of the present disclosure, which can be implemented in software and/or hardware. As shown in Fig. 1, the method specifically comprises the following steps.

At S101, at least two frames of message signals of a target balise are acquired.

In this embodiment, the target balise may be a ground balise for which signal demodulation is to be performed, and the message signal may be a message signal that is cyclically transmitted after the ground balise is activated as the train passes the ground balise. Herein, the message signal for the target balise may be a 2FSK (Binary Frequency Shift Keying) analog signal.

Specifically, when the train passes the ground balise, the ground balise modulates internally stored messages into 2FSK analog signals and transmits the signals to the air. The BTM (Balise Transmission Module) receives the analog message signals, i.e. the message signal for the target balise, via an antenna.

At S102, a current signal is superimposed with a preset number of previous frames of signals adjacent to the current signal based on a synchronization algorithm to obtain a target signal.

Herein, the preset number may be a number set in advance by a user according to actual situation, which is not limited in this embodiment. In actual operation, the maximum number of superimposed frames can be evaluated on the basis of the maximum strength of the received signals, and the strength of the superimposed signal should not exceed the maximum input strength limit of the device used for demodulation.

In the present embodiment, the synchronization algorithm may be an algorithm for synchronizing two adjacent frames of message signals, and the present embodiment is not limited to the specific synchronization algorithm.

Herein, the current signal is a message signal of any frame of the at least two frames of message signals of the target balise except the preset number of previous frames of message signals, the preset number of previous frames of signals adjacent to the current signal refer to the preset number of previous frames of signals adjacent to the current signal. For example, the BTM receives 10 frames of message signals cyclically and repeatedly transmitted by the balise, and at each superimposition, the second frame of message signal may be superimposed with the first frame of message signal, the third frame of message signal may be superimposed with the first frame of message signal and the second frame of message signal, and so forth. Herein, the second frame of message signal is the current signal when the second frame of message signal is superimposed with the first frame of message signal, and the first frame of message signal is the preset number of previous frames of signals adjacent to the current signal, with the preset number being one. Since the first frame of message signal has no previous message signal that can be superimposed, the first frame of message signal has no adjacent preset number of previous frames of signals.

Herein, the target signal may be a signal obtained after superimposing the current signal with the preset number of previous frames of signals adjacent to the current signal.

Specifically, the current signal and the preset number of previous frames of signals adjacent to the current signal are superimposed based on the synchronization algorithm to obtain the target signal.

At S103, the target signal is demodulated.

In particular, while conventional FSK demodulation methods are all based on the current signal frequency and demodulate to a corresponding 0 or 1, the embodiment of the present disclosure adds a bit synchronization algorithm based on the current algorithm, taking advantage of the characteristics of the cyclical transmission of mssage signals of the balise. An alignment of input analog signals can be achieved based on the synchronization algorithm. Prior to demodulation, the current signal and the previous signals at the same position are accumulated. In this way, the energy of the valid signal after superimposition is increased, while the energy of noise is unchanged, i.e., the signal-to-noise ratio is increased, and the demodulation success rate is increased.

According to embodiments of the present disclosure, firstly at least two frames of message signals of a target balise are acquired, then a current signal is superimposed with a preset number of previous frames of signals adjacent to the current signal based on a synchronization algorithm to obtain a target signal, wherein the current signal is a message signal of any frame of the at least two frames of message signals of the target balise except the preset number of previous frames of message signals, and finally the target signal is demodulated. By means of the solution according to the present disclosure, it is possible to exploit the characteristics of the cyclical and repetitive transmission of the same message signal of the balise, and by accumulating currently received signal and signals received at the same position in previous frames after applying bit synchronization techniques, the signal-to-noise ratio is improved and the success rate of a signal being correctly demodulated is improved, i.e., the performance of BTM to receive messages of the balise is improved.

Optionally, the superimposing the current signal with the preset number of previous frames of signals adjacent to the current signal based on the synchronization algorithm to obtain the target signal comprises the following step.

Acquiring a phase corresponding to each bit in the current signal and a phase corresponding to each bit in the preset number of previous frames of signals adjacent to the current signal.

In particular, each message signal consists of a number of bit signals, and the phase corresponding to each bit signal in each message signal can be acquired.

A bit synchronization on the phase corresponding to each bit in the current signal and the phase corresponding to each bit in the preset number of previous frames of signals adjacent to the current signal is performed based on the synchronization algorithm.

In particular, performing bit synchronization on the phase corresponding to each bit in the current signal and the phase corresponding to each bit in the preset number of previous frames of signals adjacent to the current signal based on a synchronization algorithm refers to, performing bit synchronization on the first bit signal in the first frame of message signal and the second bit signal in the second frame of message signal, and so forth.

The current signal is superimposed with the preset number of previous frames of signals adjacent to the current signal after the bit synchronization to obtain the target signal.

Specifically, after performing bit synchronization on the phase corresponding to each bit in the current signal and the phase corresponding to each bit in the preset number of previous frames of signals adjacent to the current signal, the current signal is superimposed with the preset number of previous frames of signals adjacent to the current signal after the bit synchronization to obtain the target signal.

Optionally, the superimposing the current signal with the preset number of previous frames of signals adjacent to the current signal after the bit synchronization to obtain the target signal comprises the following.

Superimposing an amplitude of the current signal with amplitudes of the preset number of previous frames of signals adjacent to the current signal after the bit synchronization to obtain a target signal.

For example, assuming the amplitude of the valid signal is V and the amplitude of noise is Z, the signal amplitude at the interference is V + Z. If there is no interference with the signal at the same position as the current signal, the amplitude of the target signal can be 2V + Z after superimposing with the preset number of previous frames of signals adjacent to the current signal, i.e., the noise is unchanged, the amplitude of the valid signal is increased, improving the signal-to-noise ratio.

Optionally, acquiring at least two frames of message signals of the target balise comprises the following.

A set of message signals corresponding to the target balise is obtained.

Herein the set of message signals corresponding to the target balise may be a number of message signals that are cyclically transmitted after the ground balise is activated as the train passes the ground balise.

Specifically, when the train passes the ground balise, the ground balise modulates internally stored messages into 2FSK analog signals and transmits them to the air. The BTM (Balise Transmission Module) receives the analog message signals via an antenna, forming a corresponding set of message signals for the target balise.

Length information of message signals in the set of message signals is obtained.

Herein, the length information can be length of each message signal in the set of message signals.

Optionally, the length information of the message signals comprises a first bit length and a second bit length.

In this embodiment, the first bit length may be 1023 bits (long message) and the second bit length may be 341 bits (short message).

In particular, the BTM receives the set of message signals and obtains the length information corresponding to the message signals in the set of message signals.

The set of message signals are divided based on the length information, resulting in at least two frames of message signals.

In particular, the set of message signals are divided based on the length information, resulting in at least two frames of message signals.

Exemplarily, during actual operation, the first 1023-bit-length signal has interference at position A, resulting in a demodulation failure, and the second 1023-bit-length signal has interference at position B, resulting in a demodulation failure. Since 1023 bits of data need to be continuously and correctly demodulated to resolve the valid data of the balise, the interference results in that the balise cannot be resolved at this time. However, if the first 1023-bit signal is superimposed with the second 1023-bit signal, at positions A and B, the signal-to-noise ratio is improved, so that upon reception of the second 1023 bits, the signals are correctly demodulated, ensuring that the balise is correctly received.

The solutions according to embodiments of the present disclosure use the characteristics of the cyclical and repetitive transmission of the same message signal of the balise, and use a bit synchronization algorithm to locate the phase synchronization position of each bit data. The input signals are accumulated at the same position to ensure the valid superimposition of signals and improve the signal-to-noise ratio for reception.

### Second embodiment

Fig. 2 is a block diagram of an apparatus for signal demodulation in an embodiment of the present disclosure. The present embodiment may be applicable to the case of signal demodulation, the apparatus may be implemented in software and/or hardware, and the apparatus may be integrated in any device providing the function of signal demodulation. As shown in Fig. 2, the apparatus for signal demodulation specifically comprises an acquisition module 201, a superimposition module 202, and a demodulation module 203.

The acquisition module is configured to acquire at least two frames of message signals of a target balise.

The superimposition module is configured to superimpose a current signal with a preset number of previous frames of signals adjacent to the current signal based on a synchronization algorithm to obtain a target signal. Herein the current signal is a message signal of any frame of the at least two frames of message signals of the target balise except the preset number of previous frames of message signals.

The demodulation module 203 is configured to demodulate the target signal.

Optionally, the superimposition module 202 comprises the following units.

A first acquisition unit is configured to acquire a phase corresponding to each bit in the current signal and a phase corresponding to each bit in the preset number of previous frames of signals adjacent to the current signal.

A bit synchronization unit is configured to perform bit synchronization on the phase corresponding to each bit in the current signal and the phase corresponding to each bit in the preset number of previous frames of signals adjacent to the current signal based on the synchronization algorithm.

A superimposition unit is configured to superimpose the current signal with the preset number of previous frames of signals adjacent to the current signal after the bit synchronization to obtain the target signal.

Optionally, the superimposition unit is particularly configured for the following.

Superimposing an amplitude of the current signal with amplitudes of the preset number of previous frames of signals adjacent to the current signal after the bit synchronization to obtain a target signal.

Optionally, the acquisition module 201 comprises:
A second acquisition unit, configured to acquire a set of message signals corresponding to the target balise;
A third acquisition unit, configured to acquire length information of message signals in the set of message signals;
A division unit, configured to divide the set of message signals based on the length information, resulting in at least two frames of message signals.

Optionally, the length information of the message signals of the balise comprises a first bit length and a second bit length.

The above product can perform the method for signal demodulation provided by any of the embodiments of the present disclosure, and has corresponding functional modules and advantageous effects to perform the method for signal demodulation.

### Third embodiment

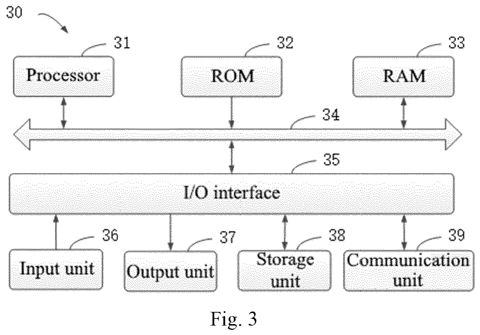

Fig. 3 shows a block diagram of an electronic device 30 that may be used to implement an embodiment of the present disclosure. The electronic devices are intended to represent various forms of digital computers, such as laptops, desktops, workstations, personal digital assistants, servers, blade servers, mainframes, and other appropriate computers. The electronic device may also represent various forms of mobile devices, such as personal digital processing, cellular telephones, smart phones, wearable devices (e.g., helmets, glasses, watches, etc.), and other similar computing devices. The components shown here, their connections and relationships, and their functions, are by way of example only, and are not meant to limit implementations of the present disclosures described and/or claimed in this document.

As shown in Fig. 3, the electronic device 30 comprises at least one processor 31, and a memory, such as a read-only memory (ROM) 32, a random access memory (RAM) 33 or the like, communicatively connected with the at least one processor 31. The memory stores computer programs executable by the at least one processor, The processor 31 may perform various appropriate actions and processes in accordance with computer programs stored in the read only memory (ROM) 32 or loaded into the random access memory (RAM) 33 from a storage unit 38. In the RAM 33, various programs and data required for the operation of the electronic device 30 may also be stored. The processor 31, the ROM 32 and the RAM 33 are connected to each other by a bus 34. An input/output (I/O) interface 35 is also connected to the bus 34.

A number of components in the electronic device 30 are connected to the I/O interface 35, including: an input unit 36, such as a keyboard, a mouse, or the like; an output unit 37 such as various types of displays, speakers, and the like; a storage unit 38, e.g., magnetic disk, optical disk, etc.; and a communications unit 39, such as a network card, modem, wireless communications transceiver, or the like. The communication unit 39 allows the electronic device 30 to exchange information/data with other devices over a computer network such as the Internet and/or various telecommunication networks.

The processor 31 may be various general-purpose and/or special-purpose processing components with processing and computing capabilities. Some examples of the processor 31 include, but are not limited to, a central processing unit (CPU), a graphics processing unit (GPU), various specialized artificial intelligence (AI) computing chips, various processors running machine learning model algorithms, a digital signal processor (DSP), and any suitable processor, controller, microcontroller, or the like. The processor 31 performs the various methods and processes described above, e.g. the method for signal demodulation as described below:
Acquiring at least two frames of message signals of a target balise;
Superimposing a current signal with a preset number of previous frames of signals adjacent to the current signal based on a synchronization algorithm to obtain a target signal, wherein the current signal is a message signal of any frame of the at least two frames of message signals of the target balise except the preset number of previous frames of message signals; and
Demodulating the target signal.

In some embodiments, the method for signal demodulation may be implemented as computer programs tangibly embodied in a computer-readable storage medium, such as the storage unit 38. In some embodiments, part or all of the computer programs may be loaded into and/or installed onto the electronic device 30 via the ROM 32 and/or the communication unit 39. When the computer programs are loaded into the RAM 33 and executed by the processor 31, one or more steps of the method for signal demodulation described above may be performed. Alternatively, in other embodiments, the processor 31 may be configured in any other suitable way, e.g. by means of firmware, to perform the method for signal demodulation.

Various implementations of the systems and techniques described above can be realized in digital electronic circuitry, integrated circuitry, field programmable gate arrays (FPGA), application specific integrated circuits (ASIC), application specific standard products (ASSP), system-on-a-chip systems (SOC), load programmable logic devices (CPLD), computer hardware, firmware, software, and/or combinations thereof. These various implementations can include implementation in one or more computer programs that are executable and/or interpretable on a programmable system including at least one programmable processor, which may be special or general purpose programmable processor, that may receive data and instructions from, and to transmit data and instructions to, a storage system, at least one input device, and at least one output device.

Computer programs for carrying out methods of the present disclosure may be written in any combination of one or more programming languages. These computer programs may be provided to a processor of a general purpose computer, special purpose computer, or other programmable data processing apparatus, such that the computer programs, when executed by the processor, cause the functions/operations specified in the flowcharts and/or block diagrams to be implemented. The computer programs may be executed entirely on the machine, partly on the machine, partly on the machine and partly on a remote machine as a stand-alone software package, or entirely on the remote machine or server.

In the context of the present disclosure, a computer readable storage medium may be a tangible medium that can contain, or store computer programs for use by or in connection with an instruction execution system, apparatus, or device. A computer readable storage medium may include, but is not limited to, an electronic, magnetic, optical, electromagnetic, infrared, or semiconductor system, apparatus, or device, or any suitable combination of the foregoing. Alternatively, the computer readable storage medium may be a machine readable signal medium. More specific examples of the machine readable storage medium would include an electrical connection based on one or more wires, a portable computer diskette, a hard disk, a random access memory (RAM), a read-only memory (ROM), an erasable programmable read-only memory (EPROM or Flash), an optical fiber, a convenient compact disc read-only memory (CD-ROM), an optical storage device, a magnetic storage device, or any suitable combination of the foregoing.

To provide for interaction with a user, the systems and techniques described here can be implemented on an electronic device having a display device (e.g., a CRT (cathode ray tube) or LCD (liquid crystal display) monitor) for displaying information to the user; and a keyboard and a pointing device (e.g., a mouse or a trackball) by which a user may provide input to an electronic device. Other kinds of devices can be used to provide for interaction with a user as well. For example, feedback provided to the user can be any form of sensory feedback (e.g., visual feedback, auditory feedback, or tactile feedback). Input from the user can be received in any form, including acoustic, speech, or tactile input.

The systems and techniques described here may be implemented in a computing system that includes a back-end component (e.g., as a data server), or that includes a middleware component (e.g., an application server), or that includes a front-end component (e.g., a user computer having a graphical user interface or a Web browser through which a user can interact with an implementation of the systems and techniques described herein), or a computing system that includes any combination of such back-end, middleware, or front end components. The components of the system can be interconnected by any form or medium of digital data communication, e.g., a communication network. Examples of communication networks include a local area network (LAN), a wide area network (WAN), blockchain networks, and the Internet.

The computing system can include clients and servers. A client and server are generally remote from each other and typically interact through a communication network. The relationship of client and server arises by virtue of computer programs running on the respective computers and having a client-server relationship to each other. The server may be a cloud server, also referred to as a cloud computing server or a cloud host, and is a host product in a cloud computing service architecture to address the drawbacks of the traditional physical host and VPS services that are difficult to manage and have weak business scalability.

It should be understood that various forms of the processes shown above may be used, with steps reordered, added, or deleted. For example, various steps described in the present disclosure may be executed in parallel, may be executed sequentially, or may be executed in a different order, which is not limited herein as long as the desired result of the technical solution of the present disclosure can be achieved.

The above detailed description is not to be construed as limiting the scope of the present disclosure. It should be apparent to those skilled in the art that various modifications, combinations, sub-combinations, and substitutions may occur depending on design requirements and other factors. It is intended that all such modifications, equivalents, and improvements be included within the spirit and scope of the present disclosure.

## Claims

1. A method for signal demodulation, **characterized by** comprising:
acquiring at least two frames of message signals of a target balise;
superimposing a current signal with a preset number of previous frames of signals adjacent to the current signal based on a synchronization algorithm to obtain a target signal, wherein the current signal is a message signal of any frame of the at least two frames of message signals of the target balise except the preset number of previous frames of message signals; and
demodulating the target signal.

2. The method of claim 1, **characterized by** the superimposing the current signal with the preset number of previous frames of signals adjacent to the current signal based on the synchronization algorithm to obtain the target signal comprising:
acquiring a phase corresponding to each bit in the current signal and a phase corresponding to each bit in the preset number of previous frames of signals adjacent to the current signal;
performing bit synchronization on the phase corresponding to each bit in the current signal and the phase corresponding to each bit in the preset number of previous frames of signals adjacent to the current signal based on the synchronization algorithm;
superimposing the current signal with the preset number of previous frames of signals adjacent to the current signal after the bit synchronization to obtain the target signal.

3. The method of claim 2, **characterized by** the superimposing the current signal with the preset number of previous frames of signals adjacent to the current signal after the bit synchronization to obtain the target signal comprising:
superimposing an amplitude of the current signal with amplitudes of the preset number of previous frames of signals adjacent to the current signal after the bit synchronization to obtain a target signal.

4. The method of claim 1, **characterized by** the acquiring at least two frames of message signals of the target balise comprising:
acquiring a set of message signals corresponding to the target balise;
acquiring length information of message signals in the set of message signals s;
dividing the set of message signals based on the length information to obtain at least two frames of message signals.

5. The method of claim 4, **characterized by** the length information of message signals comprising a first bit length and a second bit length.

6. A apparatus for signal demodulation, **characterized by** comprising:
an acquisition module, configured to acquire at least two frames of message signals of a target balise;
a superimposition module, configured to superimpose a current signal with a preset number of previous frames of signals adjacent to the current signal based on a synchronization algorithm to obtain a target signal, wherein the current signal is a message signal of any frame of the at least two frames of message signals of the target balise except the preset number of previous frames of message signals; and
a demodulation module, configured to demodulate the target signal.

7. The apparatus of claim 6, **characterized by** the superimposition module comprising:
a first acquisition unit, configured to acquire a phase corresponding to each bit in the current signal and a phase corresponding to each bit in the preset number of previous frames of signals adjacent to the current signal;
a bit synchronization unit, configured to configured to perform bit synchronization on the phase corresponding to each bit in the current signal and the phase corresponding to each bit in the preset number of previous frames of signals adjacent to the current signal based on the synchronization algorithm; and
a superimposition unit, configured to superimpose the current signal with the preset number of previous frames of signals adjacent to the current signal after the bit synchronization to obtain the target signal.

8. The apparatus of claim 7, **characterized by** the superimposition unit particularly configured to:
superimpose an amplitude of the current signal with amplitudes of the preset number of previous frames of signals adjacent to the current signal after the bit synchronization to obtain a target signal.

9. An electronic device, **characterized by** comprising:
at least one processor; and
a memory communicatively connected with the at least one processor; wherein,
the memory stores computer programs executable by the at least one processor, the computer programs, when executed by the at least one processor, enable the at least one processor to perform the method for signal demodulation of any one of claims 1-5.

10. A computer-readable storage medium, **characterized by** storing computer instructions which, when executed by a processor, cause the processor to implement the method for signal demodulation of any one of claims 1-5.
